**Europäisches Patentamt**

**European Patent Office**

**Office européen des brevets**

(11) Veröffentlichungsnummer: **0 474 325 B1**

# EUROPÄISCHE PATENTSCHRIFT

(45) Veröffentlichungstag der Patentschrift: **14.06.95**

(21) Anmeldenummer: **91250239.0**

(22) Anmeldetag: **28.08.91**

(51) Int. Cl.6: **C02F 3/28**, C02F 3/00

(54) Verfahren und Vorrichtung zur anaeroben biologischen Reinigung mit organischen Inhaltsstoffen belasteten Wässern.

(30) Priorität: **31.08.90 DE 4028037**

(43) Veröffentlichungstag der Anmeldung:
**11.03.92 Patentblatt 92/11**

(45) Bekanntmachung des Hinweises auf die
Patenterteilung:
**14.06.95 Patentblatt 95/24**

(84) Benannte Vertragsstaaten:
**AT CH DE DK ES FR GB IT LI NL**

(56) Entgegenhaltungen:
**EP-A- 0 025 309**
**EP-A- 0 046 901**
**GB-A- 2 014 555**
**GB-A- 2 063 239**

(73) Patentinhaber: **HERBERT LINDNER MASCHI-
NENBAU UND SERVICE GmbH & Co. KOM-
MANDITGESELLSCHAFT
Nymphenburger Strasse 3
D-10825 Berlin (DE)**

(72) Erfinder: **Wiesmann, Udo, Dr.-Ing., Prof.
Klingsorstrasse 27
W-1000 Berlin 41 (DE)**

(74) Vertreter: **Pfenning, Meinig & Partner
Kurfürstendamm 170
D-10707 Berlin (DE)**

**Beschreibung**

Die Erfindung betrifft ein Verfahren und eine Vorrichtung zur anaeroben biologischen Reinigung von mit organischen Inhaltsstoffen belasteten Wässern mittels Mikroorganismen.

Aus der EP 00 46 901 ist ein Verfahren zur anaeroben biologischen Reinigung von organischen Verunreinigungen enthaltenem Abwasser mit Hilfe von anaeroben Mikroorganismen bekannt, bei dem das Wasser durch minestens einen Reaktor geleitet wird, in dem die anaeroben Mikroorganismen auf einem Trägermaterial angesiedelt werden. Als Trägermaterial für die anaeroben Mikroorganismen werden makroporöse Stoffteilchen mit einem geringen spezifischen Gewicht und bestimmten Abmessungen vorgeschlagen. Das bekannte Verfahren kann in einem Reaktor durchgeführt werden, in dem das Trägermaterial, beispielsweise Schaumstoff oder Schaumgummi, ein Festbett bildet. Das zu behandelnde Abwasser wird über einen Zulauf am oberen Ende des Behälters eingeleitet, während das behandelte Abwasser am unteren Ende über einen Ablauf, dem eine Trenneinrichtung vorgeschaltet ist, abgezogen wird. Am oberen Ende des Reaktors ist außerdem eine Abzugsleitung für das beim anaeroben Prozeß entstehende Faulgas angeschlossen. An Stelle des Festbettes wird auch ein Wirbelbett aus Schaumstoffflocken vorgeschlagen, bei dem das Abwsser mit entsprechender Geschwindigkeit von unten nach oben durch den Reaktor geleitet wird. Das bekannte Verfahren hat den Nachteil, daß im Festbettreaktor nur relativ große Trägerpartikel eingesetzt werden können, damit die Gasblasen entweichen können und die Verstopfungsgefahr nicht zu groß ist. Bei größeren Partikeln ist mit einer großen Substratkonzentrationsabnahme im Innern der Partikel und folglich mit einer geringeren Ausnutzung des Trägermaterials zu rechnen. Im Wirbelbettreaktor können zwar kleinere Trägerpartikel eingesetzt werden, aber die mechanische Beanspruchung der Partikel ist größer und die Partikelkonzentration klein, so daß nur ein kleiner Teil des Reaktorvolumens voll ausgenutzt wird.

Der Erfindung liegt daher die Aufgabe zugrunde, ein Verfahren und eine Vorrichtung zur anaeroben biologischen Reinigung von mit organischen Inhaltsstoffen belasteten Wässern mittels anaeroben Mikroorganismen bereitzustellen, mit denen ein hoher Abbaugrad bei kurzen Verweilzeiten erzielt wird, wobei die Gefahr der Verstopfung bei gleichzeitiger hoher Partikelkonzentration vermieden werden sollen.

Diese Aufgabe wird erfindungsgemäß durch die Merkmale des Anspruchs 1 und des nebengeordneten Vorrichtungsanspruches gelöst.

Dadurch, daß das Trägermaterial in einer Art von Schwebebett angeordnet ist, bei dem das Wasser von oben her zugegeben und in Umlauf geführt wird, wobei der Umlaufvolumenstrom derart geregelt und eingestellt wird, daß das Schwebebett sich in gegebenen Grenzen nach unten ausdehnt, wird eine hohe Biomassenkonzentration erzielt, wobei die mechanischen Beanspruchungen der Trägerpartikel relativ gering sind. Aufgrund der Regelung, die abhängig von dem verwendeten Trägermaterial, dem Druckverlust in dem Partikelbett und von der Gasbildungsrate vorgenommen wird, kann immer mit optimalen Bedingungen gearbeitet werden.

Durch die in den Unteransprüchen angegeben Maßnahmen sind vorteilhafte Weiterbildungen und Verbesserungen des Verfahrens und der Vorrichtung nach dem Hauptanspruch und dem nebengeordneten Anspruch möglich.

Ausführungsbeispiele der Erfindung sind in der Zeichnung dargestellt und werden in der nachfolgenden Beschreibung näher erläutert. Es zeigen:

Fig. 1      ein Ausführungsbeispiel der vorliegenden Erfindung, bei der zwei Reaktoren hintereinander geschaltet sind,

Fig. 2      die Ansicht einer Verteilervorrichtung des Abwassers von der Seite und von oben gesehen,

Fig. 3      die Ansicht eines zweiten Ausführungsbeispiels einer Verteilervorrichtung für das Abwasser von oben und von der Seite gesehen,

Fig. 4      die Seitenansicht eines dritten Ausführungsbeispiels einer Verteilervorrichtung des Abwassers,

Fig. 5      die Seitenansicht auf eine Austragvorrichtung für das verbrauchte Trägermaterial nach einem ersten Ausführungsbeispiel und

Fig. 6      die Seitnansicht und die Aufsicht auf eine Austragvorrichtung gemäß einem zweiten Ausführungsbeispiel.

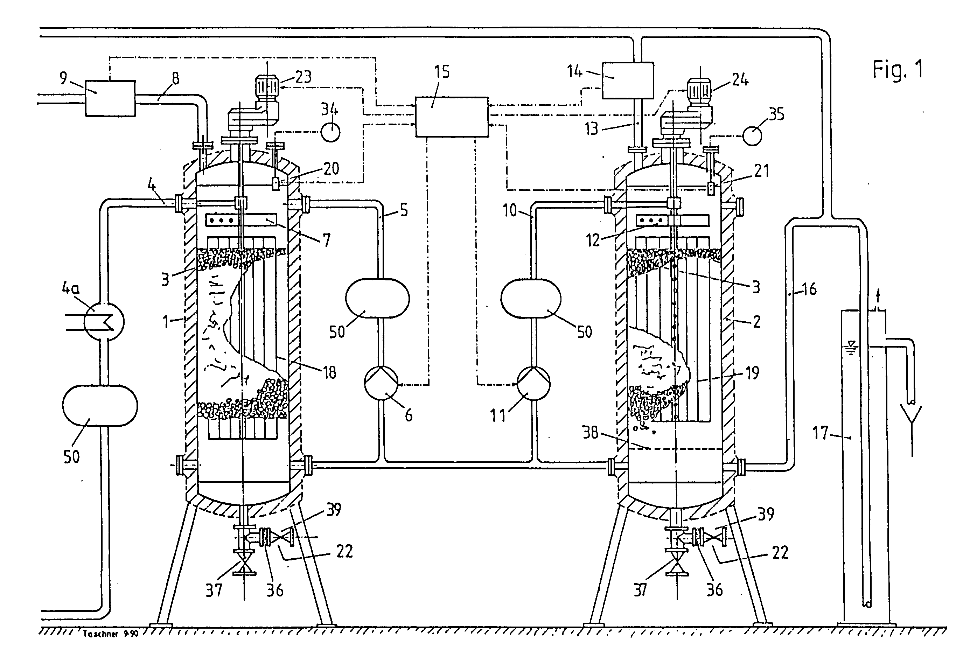

In Fig. 1 ist schematisch die Vorrichtung zur anaeroben biologischen Reinigung von mit organischen Inhaltsstoffen belasteten Wässern dargestellt. Sie besteht aus zwei Reaktoren 1, 2, die mit Trägermaterial, beispielsweise Polyurethanschaumstoffpartikeln 3 teilweise gefüllt sind. Der Reaktor 1 weist in seinem oberen Bereich eine Zuleitung 4 für das zuzuführende Abwasser und eine Umlaufleitung 5 auf, die das zu reinigende Abwasser aus dem unteren Bereich des Reaktors 1 mittels einer Pumpe 6 wieder in den oberen Bereich des Reaktors 1 führt. Das über den Zulauf 4 und die Umlaufleitung 5 zugeführte Wasser wird über eine Verteilervorrichtung 7 gleichmäßig verteilt. Weiterhin ist im oberen Bereich des Reaktors 1 eine

2

Abzugsleitung 8 für das Biogas vorgesehen, in die ein Gasmengenmesser 9 geschaltet ist.

In entsprechender Weise ist für den Reaktor 2 eine Umlaufleitung 10, in die eine Pumpe 11 geschaltet ist, vorgesehen, wobei über die Umlaufleitung 10 Abwasser aus dem ersten Reaktor 1 und Abwasser aus dem zweiten Reaktor 2 in Umlauf geführt wird. Im oberen Bereich des Reaktors 2 ist ebenfalls eine Verteilervorrichtung 12 und eine Abzugsleitung für das Biogas 13 mit Gasmengenmesser 14 angeordnet. Die Gasmengenmesser 9, 14 sind mit einer Steuer- und Regeleinrichtung 15 verbunden, die an die Pumpen 6, 11 Steuerbefehle zum Einstellen des Umlaufvolumenstroms geben. An den unteren Bereich des Reaktors 2 ist eine Ablaufleitung 16 für das gereinigte Abwasser angeschlossen, das einerseits in ein Überlaufgefäß 17 führt und außerdem mit der Abzugsleitung 13 für das Biogas verbunden ist.

In den Reaktoren 1, 2 sind Rührer 18, 19 angeordnet, die von Motoren 23, 24 angetrieben werden. In den Reaktorinnenräumen der Reaktoren 1, 2 sind jeweils mindestens ein Drucksensor 20, 21 vorgesehen, über die der Druckverlust gemessen wird. Es können auch Füllstandssensoren 34, 35 im Inneren der Reaktoren 1, 2 angebracht werden, die die Höhe des Flüssigkeitsspiegels messen. Die Sensoren 20, 21, 34, 35 sind mit der Steuer- und Regeleinrichtung 15 verbunden, die die Motoren 23, 24 der Rührer 18, 19 ansteuert. Die Rührer 18, 19 können auch dann über die Steuer- und Regeleinrichtung eingeschaltet werden, wenn die Gasbildungsrate einen bestimmten, kritischen Wert erreicht.

Im unteren Bereich der Reaktoren 1, 2 ist eine Austragvorrichtung 22 für das verbrauchte Trägermaterial und zum Abführen von Schlamm angeordnet, die später näher beschrieben werden.

In die Zulauf- bzw. Umlaufleitungen 4, 5, 10 sind Dosiereinrichtungen 50 zur Einstellung des pH-Wertes vorgesehen. Die Funktionsweise der Vorrichtung gemäß Fig. 1 ist wie folgt. Das zu reinigende Abwasser, das beispielsweise niedere Fettsäuren mit einem relativ hohen Anteil an Propionsäure enthält, gelangt aus einem nicht dargestellten Sammelbecken über die Zuleitung 4 und über die Verteilereinrichtung 12 in dne Innenraum des Reaktors 1, in dem makroporöse Schaumstoffteilchen enthalten sind. Im ersten Reaktor 1 und im zweiten Reaktor 2 findet die Methanisierung statt, da die makroporösen Schaumstoffpartikel von den entsprechenden anaeroben Bakterien besiedelt werden. Im ersten Reaktor reichert sich jedoch die Propionsäure aufgrund der noch hohen Essigsäurekonzentration, die den Propionsäureabbau hemmt, an. Erst im zweiten Reaktor kann im Bereich niedriger Essigsäurekonzentration die Propionsäure weitgehend abgebaut werden. Über die Umlaufleitung 5, 10 wird das Abwasser vom unteren Bereich des Reaktors 1, 2 im Umlauf durch die Pumpe 6, 11 wieder nach oben geführt, wobei es durch die Verteilervorrichtung 7 gleichmäßig verteilt wird. Über die in den Schaumstoffteilchen 3 eingelagerten Mikroorganismen werden Gasbläschen erzeugt, und es entsteht ein nach oben gerichteter Gasstrom, der über die Abzugsleitung 8, 13 aus dem Innenraum des Reaktors 1 herausgeleitet wird. Das erzeugte Gas wird in dem Gasmengenmesser 9 gemessen, dessen Ausgangssignal an die Steuer- und Regeleinrichtung 15 gegeben wird. Die Steuer- und Regeleinheit erzeugt abhängig vom verwendeten Trägermaterial, d.h. im Ausführungsbeispiel von dem Gewicht der makroporösen Schaumstoffteilchen und von der durch den Gasmengenmesser 9 festgestellten Gasbildung ein Steuer- und Regelsignal für die Umlaufpumpe 6, über die der Umlauf derart eingestellt wird, daß das ohne den Umlauf von den Schaumstoffteilchen gebildete Festbett aufgrund der nach unten gerichteten Strömungsgeschwindigkeit sich im Bereich von 5-30% ausdehnt.

Da die Gasbildungsrate sich in Abhängigkeit von der Zulaufsubstratkonzentration und des Zulaufvolumenstroms ändert, wird jeweils ein optimaler Umlaufvolumenstrom eingestellt, der selbstverständlich über Durchflußmesser gemessen wird, die ebenfalls mit der Steuer- und Regeleinrichtung verbunden ist. Im Innenraum des Reaktors 1 können Drucksensoren über die Höhe verteilt angeordnet sein, wobei im Ausführungsbeispiel im oberen Bereich des sich ausdehnenden Schwebebettes ein Drucksensor 20 angeordnet ist, der mit der Steuer- und Regeleinrichtung verbunden ist. Wenn der Druckverlust beispielsweise aufgrund einer auftretenden Verstopfung zu hoch wird, wird über die Steuer- und Regeleinheit 15 der Rührer 18 in Betrieb gesetzt, der die Schaumstoffteilchen im ausgedehnten Schwebebett, wobei die Rührdauer und/oder die Drehzahl veränderbar ist, bewegt oder der Umlaufvolumenstrom wird entsprechend eingestellt.

Nach mehrmaligem Umlaufen des Abwassers im ersten Reaktor 1 wird das dem Reaktor 1 heraustretende Abwasser über die Umlaufleitung 10 nach oben in den Reaktorinnenraum des Reaktors 2 geleitet, in dem es wiederum über die Verteilervorrichtung 12 gleichmäßig verteilt wird. In dem zweiten Reaktor 2 läuft ebenfalls eine kontrollierte Methanbildung ab, wobei die Bakterien eine Population bilden, die bevorzugt Propionsäure abbaut. Auch im zweiten Reaktor wird das Umlaufvolumen bzw. der Umlaufvolumenstrom über die Steuer- und Regeleinheit 15 abhängig von der durch den Gasmengenmesser 14 gemessenen Menge an erzeugtem Methangas und dem verwendeten Trägermaterial so eingestellt, daß sich gleichfalls ein sich ausdehnenden Schwebebett bildet, in dem die Schaumstoffteilchen frei schwimmen können. Die Ausdehnung des Schwebebettes erfolgt in den gleichen Grenzen wie in Reaktor 1. Auch in dem Reaktor 2 wird der Rührer 19 abhängig vom Druckverlust bzw. Flüssigkeitspegel betätigt. Das gereinigte Abwasser wird über die Ablaufleitung 6 in ein Überlaufgefäß 17 geleitet.

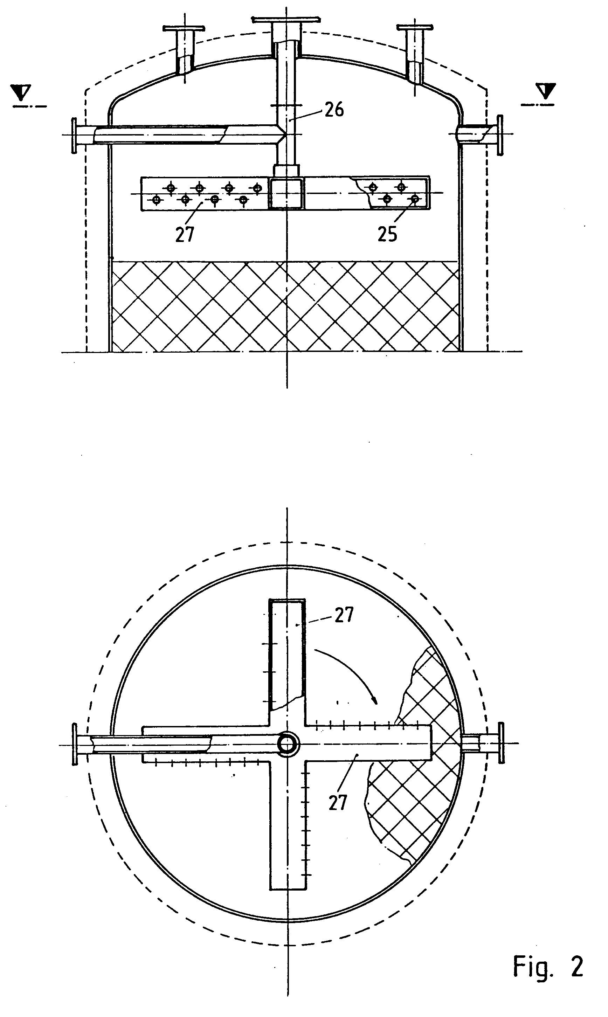

In den Fig. 2 bis 4 sind Verteilervorrichtungen für den Zulauf und Umlauf des Abwassers dargestellt, die eine gleichmäßige Verteilung des einströmenden Abwassers erzielen sollen. Fig. 2 zeigt die Ausbildung der Verteilervorrichtung als Drehkreuz 25, das eine mit der Zulaufleitung bzw. Umlaufleitung vebundene Hohlwelle 26 mit vier untereinander verbundenen Zulaufrinnen 27 mit Überlaufwehren aufweist. Die Hohlwelle 26 kann von einem Motor, beispielsweise dem Motor 23, 24 der Rührer 18, 19 elektrisch zur Drehung angetrieben werden, der Antrieb kann aber auch hydrodynamisch gemäß dem Rasensprengerprinzip erfolgen.

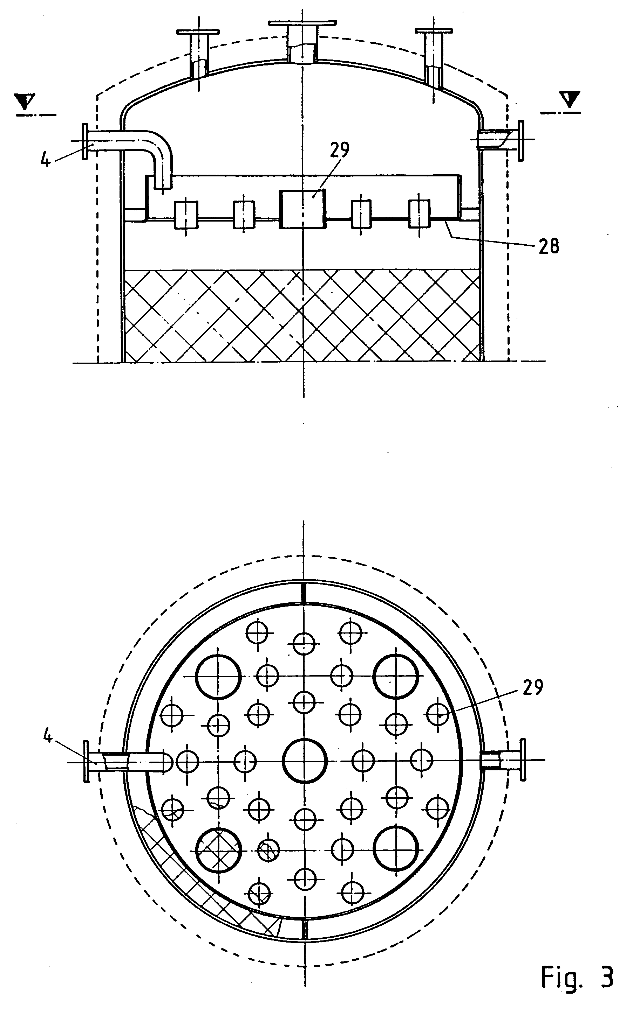

Fig. 3 zeigt die Verteilung des zufließendes Abwassers über einen Lochboden 28, der in ein Blech eingesetzte Rohrstücke 29 aufweist. Das zulaufende Wasser wird auf dem Lochboden 28 verteilt und nach Erreichn der Höhe der Rohrstücke 29 fließt es durch die Rohrstücke in das Reaktorinnere.

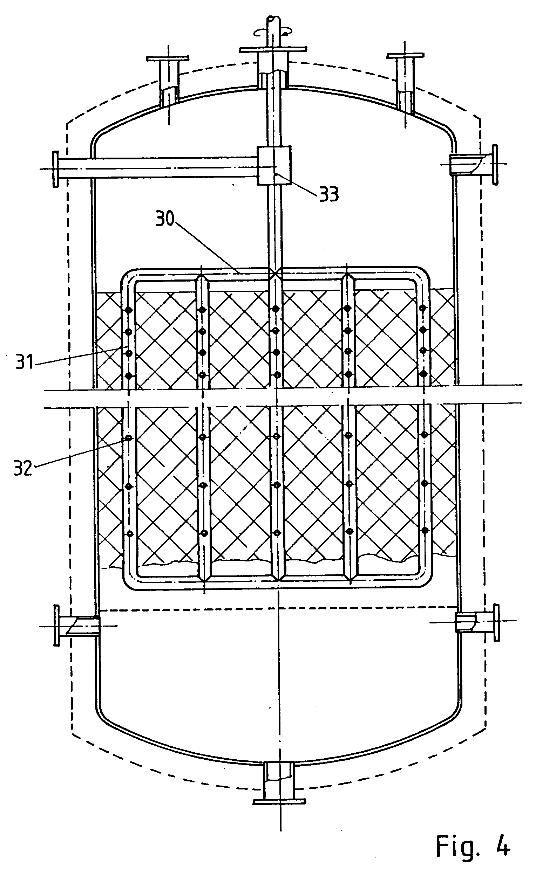

In Fig. 4 dient gleichzeitig ein Rührelement 30 als Verteilervorrichtung. Das Rührelement 30 besteht aus miteinander verbundenen Rohren 31, die Löcher 32 aufweisen, wobei das Ab wasser von der Zulaufrichtung über eine Hohlwelle 33 in den Rohren 31 verteilt wird und über die Löcher 32 in das Reaktorinnere gelangt.

Die Reaktoren 1, 2 weisen Austragsvorrichtungen 22 auf, die sowohl zum Entfernen von Schlamm als auch von verbrauchtem Trägermaterial dienen. Die beispielhaft am ersten Reaktor 1 gezeigte Austragvorrichtung 22 ist für einen Reaktor ohne Siebboden geeignet, wobei über die eine Abzweigung 39, in die eine Rückhaltevorrichtung, beispielsweise ein Sieb 36 geschaltet ist, der Überschußschlamm ausgetragen wird, während über die zweite Abzweigung 39 die Schaumstoffteilchen entfernt werden.

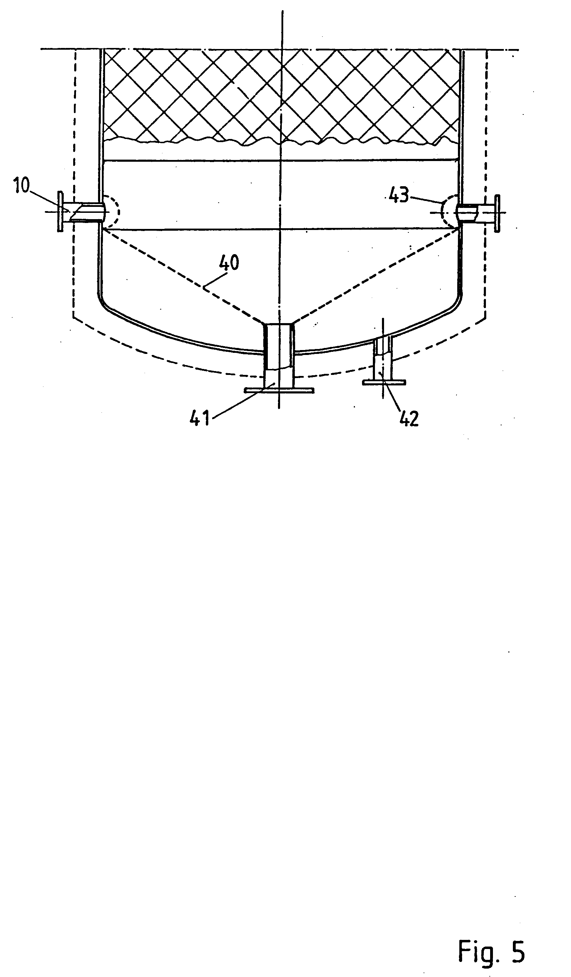

In einem Ausführungsbeispiel nach Fig. 5 ist im unteren Bereich des Reaktors ein konischer Siebboden 40 vorgesehen, der in einem Abzugsrohr 41 mündet, durch das das Trägermaterial entfernt wird. Unterhalb des Siebbodens ist ein weiterer Auslaßstutzen für den Überschußschlamm vorgesehen, der durch den konischen Siebboden 40 hindurchgeschwemmt wird. Die Umlaufleitungen 5, 10 können oberhalb oder unterhalb des Siebbodens 40 abgehen, wobei in der Ausführung oberhalb ein gelochtes Ringblech 43 zum Zurückhalten des Trägermaterials vor dem Auslaß angeordnet ist.

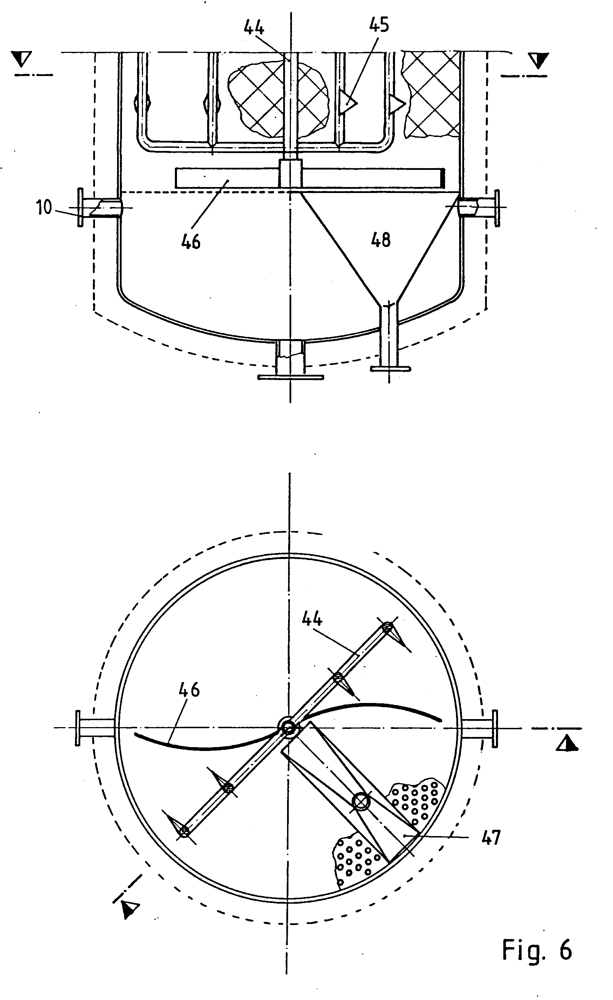

In Fig. 6, das eine weitere Austragvorrichtung zeigt, ist mit der Welle 44 des Rührers 45, der pflugscharähnliche Rührelemente aufweist, ein Räumer 46 mit Kratzer verbunden, der bei Drehung der Welle 44 die verbrauchten Partikel auf den Siebboden 38 zusamemmenschiebt und über eine Öffnung 47 in den Siebboden 38 in einen Ablauftrichter 48 fördert. Dieser kann für den Durchlauf von Schlamm und Wasser ebenfalls perforiert sein.

Die ausgetragenen Trägermaterialpartikel werden entweder als Abfall behandelt oder wieder regeneriert, wobei sie beispielsweise ausgepreßt werden können. Danach werden sie dem Reaktor wieder zugeführt. Eine Vorrichtung zum Eintragen der Partikel am Reaktorkopf kann derart ausgebildet sein, daß ein Ventil vorgesehen ist, daß in einer mit einem Vorratsbehälter verbundenen Eintragleitung angeordnet ist, wobei die Partikel aus dem Vorratsbehälter über das Ventil so zugeführt werden, daß kein Biogas entweichen kann.

Das Abwasser wird vorzugsweise mit einer Temperatur von ungefähr 35° den Reaktoren zugeführt und wird bei seinem Umlauf auf dieser Temperatur gehalten. Die Aufheizung des zugeführten Abwassers kann mit Hilfe des gewonnenen Methangases durchgeführt werden. Zur Aufrechterhaltung der Temperatur können die Reaktoren mit einem Heizmantel vesehen sein, es können im Umlaufstrom aber auch Wärmetauscher 4a angeordnet sein, die ebenfalls als Heizenergie das Methangas verwenden.

Bei Anwendung von Rührern können diese derart ausgebildet sein, daß zusätzliche Aufwuchsflächen für die Bakterien geschaffen werden. Beispielsweise können die Rührelemente der Rührer mit einer Schicht aus dem Trägermaterial durch Kleben oder dgl. versehen sein.

Im folgenden wird ein Beispiel für den Verfahrensablauf und die verwendeten Reaktorvorrichtungen angegeben.

Nach einer Feststoffvorabscheidung gelangt das Abwasser in den Puffertank. Aus diesem Tank fördert eine Pumpe das Abwasser durch einen Wärmetauscher, in dem das Wasser auf ca. 37° C aufgeheizt wird, in den ersten Reaktor. Die beiden hintereinandergeschalteten Reaktoren sind baugleich; sie sind thermisch isoliert und mit einem langsam drehenden Rührer versehen. Als Trägermaterial des Schwebebettes werden PU-Schaumstoffpartikel verwendet; das Schüttvolumen des Schaumstoffs beträgt etwa 50 - 58% des Reaktorvolumens. Durch den von oben nach unten geführten Umlaufvolumenstrom wird der Reaktor vollständig durchmischt und das Schwebebett nach unten ausgedehnt.

Das Abwasser ist derart zusammengesetzt, daß bei einem relativ konstanten pH-Wert von etwa 6 pH-Einheiten die Substratkonzentration im Zulauf zwischen 2,4 und 6 g/l gelöster organischer Kohlenstoff (Dissolved Organic Carbon DOC) schwankt. Dies entspricht etwa 7,2 - 18 g/l Chemischer Sauerstoffbedarf (CSB).

Der Anteil biologisch nicht abbaubarer Verbindungen des zugeführten Substrats beträgt etwa 30%. Der Gehalt an Gesamtphosphor liegt bie 0,1 g/l, Ammoniumstickstoff ($NH_4$-N) erreicht Konzentrationen von ca. 1 g/l. Niedere Fettsäuren ($C_2$-$C_5$) wurden in einem Bereich von 0,9 - 2,1 g/l DOC (2,7 - 6,3 g/l CSB) gemessen. Der Anteil der Essigsäure als leicht verfügbares Substrat an den niederen Fettsäuren beträgt im gewichteten Mittel rund 33%, die Propionsäure liegt mit mittleren 23% bei einer Schwankungsbreite von 21-37% erheblich niedriger. Die verbleibenden DOC-Anteile bestehen aus höheren organischen Verbindungen, die durch Bakterien über mehrere Zwischenschritte zu Essigsäure und Propionsäure umgewandelt werden. Als letzten Schritt in der Kette der biologischen Reaktionen werden Essigsäure und Propionsäure durch spezielle Bakterien zu Methan umgesetzt.

## Beispielrechnung, Zulaufzusammensetzung

| | |
|---|---|
| Gesamt – DOC | 4,5 g/l |
| nicht abbaubar (30%) | 1,5 g/l |
| biologisch abbaubar | 3,0 g/l |

davon:

| | |
|---|---|
| niedere Fettsäuren | 1,9 g/l |
| höhere org. Verbindungen | 1,1 g/l |

Nach dem Anfahrprozess der Anlage bei dem eine zuständige Zunahme des DOC-Abbaugrades zu verzeichnen war, schwankte der DOC-Abbaugrad (Zulaufkonzentration - Ablauflaufkonzentration/Zulaufkonzentration) zwischen 63 und 76% und der Gasvolumenstrom zwischen 11-16,5 $m^3/m^3$ Tag bei Verweilzeiten von 0,15 - 0,28 Tagen je nach Zulaufkonzentration und -zusammensetzung.

Beispielhaft lagen die Zulaufkonzentrationen zwischen 4,6 und 2,5 g/l DOC. (13,8 - 7,5 g/l CSB), die Ablaufwerte stabilisierten sich auf einen Mittelwert von knapp 1,0 g/l DOC (3,0 g/l CSB). Die Anlage ist gegenüber starken Konzentrationsschwankungen im Zulauf unempfindlich. Die niederen Fettsäuren werden in einen großen Teil bereits im ersten Reaktor abgebaut zu Methan (und Kohlendioxid). Der Anteil der Propionsäure erhöht sich jedoch im ersten Reaktor durch die Hydrolyse höherer organischer Verbindungen. So wurden beispielsweise 0,400 g/l Propionsäure im Zulauf gemessen, im Ablauf des 1. Reaktors 0,53 g/l Propionsäure und erst im Ablauf des zweiten Reaktors 0,08 - 0,1 g/l Propionsäure. Die anderen biologsich abbaubaren Verbindungen sind im Ablauf des zweiten Reaktors bei auf einem sehr geringen Anteil an Essigsäure fast vollständig eliminiert.

Im beschriebenen Ausführungsbeispiel wurde das Verfahren und die Vorrichtung an Hand der Reinigung von bestimmten Abwässern erläutert. Selbstverständlich kann die Erfindung auch für andere mit organischen Inhaltsstoffen belasteten Wässern angewendet werden.

**Patentansprüche**

1. Verfahren zur anaeroben biologischen Reinigung von mit organischen Inhaltsstoffen belasteten Wässern mittels anaeroben Mikroorganismen, bei dem das zu reinigende Wasser durch einen poröses Trägermaterial zur Ansiedelung der Mikroorganismen enthaltenden Reaktor geleitet wird, von oben her zugegeben und im Umlauf geführt wird, **dadurch gekennzeichnet,** daß der Druckverlust und/oder die Gasbildungsrate und der Umlaufvolumenstrom gemessen werden und abhängig vom verwendeten Trägermaterial und von den gemessenen Werten der Umlaufvolumenstrom so eingestellt wird, daß das Trägermaterial ein sich in vorgegebenen Grenzen nach unten hin ausdehnendes Schwebebett bildet.

2. Verfahren nach Anspruch 1, dadurch gekennzeichnet, daß die Höhe des Flüssigkeitsspiegels im Reaktor gemessen wird und abhängig von dieser das Schwebebett aufgelockert wird.

3. Verfahren nach Anspruch 1 oder 2, dadurch gekennzeichnet, daß das zugeführte und umlaufende Wasser gleichmäßig über das/oder die in das ausgedehnte Schwebebett verteilt wird.

4. Verfahren nach einem der Ansprüche 1 bis 3, dadurch gekennzeichnet, daß verbrauchtes Trägermaterial aus dem Reaktor ausgeschleust und neues oder regeneriertes Wasser zugeführt wird.

5. Verfahren nach einem der Ansprüche 1 bis 4, dadurch gekennzeichnet, daß als Trägermaterial Stoffe geringerer Dichte als Wasser mit offenen Makroporen und großem Porenvolumen gewählt werden.

6. Vorrichtung zur anaeroben biologischen Reinigung von mit organischen Inhaltsstoffen belasteten Wässern mit mindestens einem Trägermaterial zur Ansiedelung von Mikroorganismen aufnehmenden Reaktor (1,2) mit einer Zulaufleitung (4) für das zu reinigende Wasser und einem Umlaufkreislauf (5,10), in dem das Wasser von oben nach unten geführt und zusammen mit dem zulaufenden Wasser von oben in den Reaktor (1,2) gegeben wird, mit einer Abzugsleitung (8,13) für gebildetes Biogas, einer Pumpvorrichtung (6,11) und einer Steuer- und Regeleinrichtung (15), dadurch gekennzeichnet, daß die Steuer- und Regeleinrichtung mit mindestens einem im Innenraum des Reaktors angeordneten Sensor (20,21,34,35) zur Erfassung des Druckverlusts und/oder einem Gasmengenmesser (9,14) über den die Gasbildungsrate bestimmbar ist, und einem Durchflußmesser zur Messung des Umlaufvolumenstroms verbunden ist und abhängig von den Ausgangssignalen des Sensors (20,21,34,35) zur Erfassung des Druckverlusts und/oder des Gasmengenmessers und des Durchflußmessers ein Steuer-/Regelsignal an die Pumpvorrichtung (6,11) zur Regelung des Umlaufvolumenstroms in einer Weise, daß ein sich in vorgegebenen Grenzen nach unten hin ausdehnendes Schwebebett entsteht, abgibt.

7. Vorrichtung nach Anspruch 6, dadurch gekennzeichnet, daß der Sensor als Drucksensor ausgebildet ist.

8. Vorrichtung nach Anspruch 6, dadurch gekennzeichnet, daß der Sensor als Sensor (34,35) zur Messung des Flüssigkeitspegels ausgebildet ist.

9. Vorrichtung nach einem der Ansprüche 6 bis 8, dadurch gekennzeichnet, daß in die Abzugsleitung (8, 13) für gebildetes Biogas ein Gasmengenmesser (9, 14) vorgesehen ist, der mit der Steuer- und Regeleinrichtung (15) verbunden ist.

10. Vorrichtung nach einem der Ansprüche 6 bis 9, dadurch gekennzeichnet, daß in dem Innenraum des Reaktors (1, 2) eine Rührvorrichtung (18, 19) angeordnet ist, die abhängig von einem Signal der Steuer- und Regeleinrichtung (15) betätigbar ist.

11. Vorrichtung nach einem der Ansprüche 6 bis 10, dadurch gekennzeichnet, daß eine Verteilervorrichtung (7, 12) zur gleichmäßigen Verteilung des in den Reaktor fließenden Wassers vorgesehen ist.

12. Vorrichtung nach Anspruch 11, dadurch gekennzeichnet, daß die Verteilervorrichtung (7, 12) als Rührvorrichtung (30) ausgebildet ist, die aus mehreren miteinander verbundenen perforierten Rohren (21) besteht.

13. Vorrichtung nach Anspruch 11, dadurch gekennzeichnet, daß die Verteilervorrichtung als Blech (28) mit eingesetzten Rohrstücken (29) besteht, das im oberen Bereich des Reaktors (1, 2) angeordnet ist.

14. Vorrichtung nach Anspruch 11, dadurch gekennzeichnet, daß die Verteilervorrichtung als elektrisch oder hydrodynamisch angetriebenes Drehkreuz (25) mit miteinander verbundenen Zulaufrinnen (27) und Überlaufwehren ausgebildet ist.

15. Vorrichtung nach einem der Ansprüche 6 bis 14, dadurch gekennzeichnet, daß eine Austragvorrichtung für das verbrauchte Trägermaterial vorgesehen ist.

16. Vorrichtung nach einem der Ansprüche 6 bis 15, dadurch gekennzeichnet, daß die Rührvorrichtungen derart ausgebildet sind, daß sie zusätzliche Aufwuchsflächen für die Mikroorganismen zur Verfügung stellen.

17. Vorrichtung nach einem der Ansprüche 6 bis 16, dadurch gekennzeichnet, daß am oberen Bereich des Reaktors (1,2) eine Vorrichtung zum Eintragen von Trägermaterial vorgesehen ist, das mit einem kleinen Wasserteilstrom über ein Ventil derart zugeführt wird, daß kein Biogas entweichen kann.

18. Vorrichtung nach einem der Ansprüche 6 bis 17, dadurch gekennzeichnet, daß zwei Reaktoren (1,2 ) hintereinander geschaltet sind, wobei im ersten die kontrollierte Versäuerung und/oder Methanbildung und im zweiten die kontrollierte Methanbildung stattfindet.

19. Vorrichtung anch einem der Ansprüche 6 bis 18, dadurch gekennzeichnet, daß die Rührdauer und die Drehzahl des Rührers veränderbar ist.

**Claims**

1. A process for anaerobic biological cleaning of waters containing organic substances by means of anaerobic micro-organisms, in which the water to be cleaned is ducted through a reactor containing a porous carrier material for colonization of the micro-organisms, delivered from the top and circulated, **characterized in that** the loss in pressure and/or the gas developing rate and the circulation volume flow are measured and set, in dependence of the applied carrier material and the measured values of the circulation volume flow, so that the carrier material forms a floating bed which expands downwards within specified limits.

2. A process according to claim 1, **characterized in that** the height of the liquid level in the reactor is measured, and that the floating bed is loosened in dependence thereof.

3. A process according to claim 1 or 2, **characterized in that** the delivered and circulating water is evenly distributed over the expanded floating bed.

4. A process according to one of claims 1 to 3, **characterized in that** spent carrier material is removed from the reactor and new or regenerated water is delivered.

5. A process according to one of claims 1 to 4, **characterized in that** substances of lesser density than water with open macropores and large pore volume are chosen as carrier material.

6. A device for anaerobic biological cleaning of waters containing organic substances by way of at least one reactor (1, 2) which accommodates carrier material for colonization of micro-organisms, having a delivery pipe (4) for water to be cleaned and a circulation circuit (5, 10), in which the water is ducted from the top to the bottom and delivered, together with entering water, from the top into the reactor (1, 2), comprising a discharge pipe (8, 13) for developing bio-gas, a pumping device (6, 11) and a control and regulating device (15), **characterized in that** the control and regulating device is connected to at least one sensor (20, 21, 34, 35), arranged inside the reactor, for the purpose of detecting a loss in pressure, and/or a gas-volume meter (9, 14), by means of which the gas-forming rate can be determined, and a throughflow meter for measuring the circulation volume flow, and that it transmits, in dependence of the output signals of the sensor (20, 21, 34, 35) for detection of a loss in pressure and/or the gas-volume meter and the throughflow meter, a control/regulating signal to the pumping device (6, 11) so as to control the circulation volume flow in such a manner that a floating bed develops which expands downwards within specified limits.

7. A device according to claim 6, **characterized in that** the sensor is a pressure sensor.

8. A device according to claim 6, **characterized in that** the sensor is designed as a sensor (34, 35) for measuring the liquid level.

9. A device according to one of claims 6 to 8, **characterized in that** a gas-volume meter (9, 14), which is connected to the control and regulating device (15), is established in the discharge pipe (8, 13) for established bio-gas.

10. A device according to one of claims 6 to 9, **characterized in that** an agitating device (18, 19), which is operable in dependence of a signal from a control and regulating device (15), is arranged in the inside area of the reactor (1, 2).

**11.** A device according to one of claims 6 to 10, **characterized in that** a distributing device (7, 12) is provided for even distribution of water flowing into the reactor.

**12.** A device according to claim 11, **characterized in that** the distributing device (7, 12) is designed as an agitating device (30), composed of a plurality of interconnected perforated pipes (21).

**13.** A device according to claim 11, **characterized in that** the distributing device comprises a metal sheet (28) with inserted tubular elements (29) and is arranged in the upper area of the reactor (1, 2).

**14.** A device according to claim 11, **characterized in that** the distributing device is designed as an electrically or hydro-dynamically driven rotary cross (25) with interconnected feed grooves (27) and anti-overspills.

**15.** A device according to one of claims 6 to 14, **characterized in that** a discharge device for spent carrier material is provided.

**16.** A device according to one of claims 6 to 15, **characterized in that** the agitating devices are designed so as to make available additional colonization surfaces for the micro-organisms.

**17.** A device according to one of claims 6 to 16, **characterized in that** in the upper region of the reactor (1, 2) is provided a device for entering carrier material which is delivered by way of a small portion of a water flow via a valve in such a manner that no bio-gas can escape.

**18.** A device according to one of claims 6 to 17, **characterized in that** two reactors (1, 2) are set in series, and that controlled acidulation and/or development of methane takes place in the first, and controlled development of methane in the second.

**19.** A device according to one of claims 6 to 18, **characterized in that** the duration of agitation and the revolutions of the agitator are adjustable.

**Revendications**

**1.** Procédé d'épuration biologique anaerobie d'eaux chargées de contaminants organiques à l'aide de micro-organismes anaérobies, dans lequel l'eau à épurer est envoyée en circuit fermé dans un réacteur contenant un matériau support poreux destiné à coloniser des micro-organismes, en pénétrant par le haut, caractérisé en ce qu'on mesure la perte de charge et/ou le taux de formation de gaz et le débit volumique du recyclage et, en fonction du matériau support utilisé et des valeurs mesurées, on ajuste le débit volumique du recyclage de façon que le matériau support forme un lit fluidisé qui s'étend vers le bas, dans des limites prédéfinics.

**2.** Procédé salon la revendication 1, caractérisé en ce qu'on mesure la hauteur du niveau du liquide dans le réacteur et en ce qu'en fonction de cette hauteur, on désagrège le lit fluidisé.

**3.** Procédé selon la revendication 1 ou 2, caractérisé en ce que l'eau amenée et recyclée est uniformément répartie sur ou dans le lit fluidisé.

**4.** Procédé selon l'une des revendications 1 à 3, caractérisé en ce que le matériau support consommé est extrait du réacteur, et en ce qu'on introduit de l'eau neuve ou régénérée.

**5.** Procédé selon l'une des revendications 1 à 4, caractérisé en ce qu'on choisit comme matériau support des substances ayant une densité inférieure à celle de l'eau, présentant des macropores ouverts et un grand volume de pores.

**6.** Dispositif d'épuration biologique anaérobic d'eaux chargées de contaminants organiques, comportant au moins un réacteur (1, 2), dans lequel est logé un matériau support destiné à coloniser des micro-organismes, réacteur comportant une conduite d'amenée (4) destinée à l'eau à épurer et un circuit fermé (5, 10), dans lequel l'eau est introduite de haut en bas et, avec l'eau amenée, est introduite par en haut dans le réacteur (1, 2), et comportant une conduite d'évacuation (8, 13) pour le biogaz formé, un dispositif de pompage (6, 11) et une installation de commande et de régulation (15), caractérisé en ce que l'installation de commande et de régulation est reliée à au moins un capteur (20, 21, 34, 35), disposé dans le volume intérieur du réacteur, destiné à déterminer la perte de Charge et/ou à un compteur de gaz (9, 14) à l'aide duquel on peut déterminer le taux de formation du gaz, et à un débitmètre destiné à mesurer le débit volumique de recyclage, et en ce que, en fonction des signaux de sortie du capteur (20, 21, 34, 35) destiné à déterminer la perte de charge, et/ou du compteur de gaz et du débitmètre, il émet un signal de commande/régulation au niveau du dispositif de pompage (6, 11) pour réguler le débit volumique de recyclage, de façon qu'il se crée un lit fluidisé s'étendant vers le bas dans des limites prédélinies.

7. Dispositif selon la revendication 6, caractérisé en ce que le capteur est un capteur de pression.

8. Dispositif selon la revendication 6, caractérisé en ce que le capteur est un capteur (34, 35) destiné à mesurer le niveau du liquide.

9. Dispositif selon l'une des revendications 6 à 8, caractérisé en ce qu'on prévoit, dans la conduite d'évacuation (8, 13) du biogaz formé, un compteur à gaz (9, 14) qui est relié à l'installation de commande et de régulation (15).

10. Dispositif salon l'une des revendications 6 à 9, caractérisé en ce que dans le volume intérieur du réacteur (1, 2) est placé, un dispositif agitateur (18, 19), qui peut être manoeuvré en fonction d'un signal émanant de l'installation de commande et de régulation (15).

11. Dispositif selon l'une des revendications 6 à 10, caractérisé en ce qu'on prévoit un dispositif répartiteur (7, 12), destiné à répartir uniformément l'eau qui pénètre dans le réacteur.

12. Dispositif selon la revendication 11, caractérisé en ce que le dispositif répartiteur (7, 12) est un dispositif agitateur (30), qui est constitué de plusieurs tubes perforés (21), reliés les uns aux autres.

13. Dispositif selon la revendication 11, caractérisé en ce que le dispositif répartiteur est constitué d'une tôle (28) dans laquelle sont insérés des tronçons tubulaires (29), ladite tôle étant disposée dans la zone supérieure du réacteur (1, 2).

14. Dispositif selon la revendication 11, caractérisé en ce que le dispositif répartiteur est un tourniquet (25) à commande électrique ou hydrodynamique, avec des rigoles d'amenée (27) reliées les unes aux autres et un trop-plein.

15. Dispositif selon l'une des revendications 6 à 14, caractérisé en ce qu'on prévoit un dispositif d'évacuation pour le matériau support consommé.

16. Dispositif selon l'une des revendications 6 à 15 , caractérisé en ce que les dispositifs agitateurs sont conçus de façon à créer des surfaces supplémentaires de culture des micro-organismes.

17. Dispositif selon l'une des revendications 6 à 16, caractérisé en ce qu'on prévoit, dans la zone supérieure du réacteur (1, 2), un dispositif pour introduire le matériau support, lequel, avec un petit débit partiel d'eau, est envoyé par l'intermédiaire d'une vanne, de façon qu'il ne puisse y avoir de dégagement de biogaz.

18. Dispositif selon l'une des revendications 6 à 17, caractérisé en ce que deux réacteurs (1, 2) sont installés l'un en aval de l'autre, une acidification contrôlée et/ou une formation de méthane ayant lieu dans le premier tandis qu'une formation contrôlée de méthane a lieu dans le deuxième.

19. Dispositif selon l'une des revendications 6 à 18, caractérisé en ce qu'on peut faire varier la durée de l'agitation et la vitesse de rotation de l'agitateur.

Fig. 1

EP 0 474 325 B1

Fig. 2

Fig. 3

Fig. 4

Fig. 5

Fig. 6